# EUROPEAN PATENT APPLICATION

(11) **EP 4 779 484 A1**
(43) Date of publication of application: **22.07.2026**
(21) Application number: 26151694.2
(22) Date of filing: 13.01.2026
(51) Int. Cl.: G06F 13/40

(54) **APPARATUS, SYSTEM AND METHOD FOR DIE-TO-DIE (D2D) INTERCONNECTIONS**

(30) Priority: 15.01.2025 US 202519022392
(71) Applicant: Google LLC, Mountain View, CA 94043 (US)
(72) Inventor: Chen, Xi, Mountain View, 94043 (US); Rajamani, Gurushankar, Mountain View, 94043 (US); Biswas, Sukalpa, Mountain View, 94043 (US); Jones, Jakob Raymond, Mountain View, 94043 (US); Bhatia, Sandeep, Mountain View, 94043 (US)
(74) Representative: Betten & Resch

(57) **Abstract**

A link layer architecture for D2D interconnections or communications. The architecture includes a self-contained D2D module that is capable of receiving data in multiple input bus protocols and transferring that data through a physical layer connection to another chiplet. The D2D module is a self-contained base block used to transfer data across dies. It includes a transmit (Tx) section/logic and a receive (Rx) section/logic. Each section/logic forms a building block that can be used to transfer data between dies or chiplets.

## Description

### BACKGROUND

Due to die size constraints, die-to-die (D2D)-based or chiplet-based system-on-ship (SoC) designs have become prevalent. A chiplet is a small, modular chip designed to operate as part of a system, e.g., a SoC. Chiplets avoid the need to fabricate a single, typically larger, monolithic die. Specifically, the components on a monolithic die are partitioned into discrete modular components as chiplets that are interconnected as part of a larger die package. Chiplets comprise intellectual property (IP) that can then be reused and customized across different packages. Examples of chiplets include a processor core, a memory block, an accelerator, a driver, an input/output tile, etc. Each chiplet is typically formed on a discrete die. Efficient and secure transfer of diverse, proprietary on-die traffic across chiplets with limited D2D physical layer (PHY) resources presents certain challenges.

### BRIEF SUMMARY

The disclosed technology includes a D2D link layer architecture for interconnecting dies or chiplets. The architecture may take the form of an apparatus or system that includes the building blocks of a D2D module. For example, an aspect of the disclosed technology is an apparatus for die-to-die interconnections, comprising: one or more input first-in-first-out (FIFO) wrappers configured to receive input data formatted according to a given protocol; a data packer configured to convert the input data to converted data having a predefined data width; one or more transmit FIFO wrappers; and a data splitter coupled to the data packer and the one or more transmit FIFO wrappers, the data splitter being configured to split the converted data for receipt at the one or more transmit FIFO wrappers.

In accordance with this aspect of the disclosed technology, at least two of the one or more transmit FIFO wrappers may be configured to have an adjustable storage capacity to receive different amounts of the converted data.

Further in accordance with this aspect of the disclosed technology, the apparatus may comprise a CDC logic coupled between the data packer and the data splitter. The data packer can operate in a first time domain using a first clock running at a first clock frequency and the plurality of transmit FIFO wrappers operate in a second time domain using a second clock running at a second clock frequency. In addition, the CDC logic may operate to bridge the first time domain and the second time domain. Further still, the plurality of input FIFO wrappers may operate in the first time domain.

Further in accordance with this aspect of the disclosed technology, the apparatus may comprise a plurality of transmit modules coupled to the plurality of transmit FIFO wrappers. In some examples, each transmit module of the plurality of transmit modules may be coupled to a respective one of the plurality of transmit FIFO wrappers.

Further in accordance with this aspect of the disclosed technology, the apparatus is formed on a chiplet of a system on a chip (SoC).

As another example, the disclosed technology may take the form of an apparatus for die-to-die interconnections, comprising: one or more input first-in-first-out (FIFO) wrappers configured to receive input data formatted according to a given protocol; a data packer configured to operate in a first time domain and to convert the input data to converted data having a predefined data width; a data splitter coupled to the data packer, the data splitter being configured to operate in a second time domain and to split the converted data for receipt at the one or more input FIFO wrappers; and a CDC logic coupled between the data packer and the data splitter, wherein the CDC logic operates to bridge the first time domain and the second time domain.

In accordance with this aspect of the disclosed technology, the apparatus may also comprise a plurality of transmit FIFO wrappers coupled to the data splitter. In some examples, at least two of the plurality of transmit FIFO wrappers are configured to have an adjustable storage capacity to receive different amounts of the converted data. Further in accordance with this aspect of the disclosed technology, the apparatus is formed on a chiplet of a system on a chip (SoC).

As another example, the disclosed technology may take the form of an apparatus for die-to-die interconnections, comprising: one or more receive FIFO wrappers that output received data; a data expander coupled to the plurality of receive FIFO wrappers, the data expander being configured to process the received data to converted data having a predefined data width; a protocol unpacker configured to convert the converted data to data formatted according to a given protocol; and one or more output first-in-first-out (FIFO) wrappers configured to output the data formatted according to a given chiplet protocol.

In accordance with this aspect of the disclosed technology, the protocol unpacker may be configured to operate in a first time domain. Further, the data expander is configured to operate in a second time domain. Further still, the apparatus may comprise a CDC logic coupled between the protocol unpacker and the data expander, wherein the CDC logic operates to bridge the first time domain and the second time domain.

As another example, the disclosed technology may take the form of a system for die-to-die interconnections, comprising: one or more input first-in-first-out (FIFO) wrappers configured to receive input data formatted according to a first one of a plurality of given protocols; a data packer configured to operate in a first time domain and to convert the input data to transmit converted data having a predefined data width; a data splitter coupled to the data packer, the data splitter being configured to operate in a second time domain and to split the transmit converted data for receipt at the plurality of input FIFO wrapper; and a CDC transmit logic coupled between the data packer and the data splitter, wherein the transmit CDC logic operates to bridge the first time domain and the second time domain; a plurality of receive FIFO wrappers that output received data; a data expander coupled to the plurality of receive FIFO wrappers, the data expander being configured to operate in the second time domain and to process the received data to received converted data having the predefined data width; a protocol unpacker configured to operate in the first time domain and to convert the received converted data to output data formatted according to a second one of the plurality of given protocols; and one or more output first-in-first-out (FIFO) wrappers configured to output the data formatted according to a second one of the plurality of given protocols.

In accordance with this aspect of the disclosed technology, the system is formed on a chiplet of a system on a chip (SoC). Further in accordance with this aspect of the disclosed technology, the first one of the plurality of given protocols is different than the second one of the plurality of given protocols. Further still, the first one of the plurality of given protocols is a same protocol as the second one of the plurality of given protocols. In addition, the system may comprise a loop back path between the data expander and the data splitter.

### BRIEF DESCRIPTION OF THE DRAWINGS

Figure 1 illustratively depicts an example transmit section/logic in accordance with an aspect of the disclosed technology.
Figure 2 illustratively depicts an example receive section/logic in accordance with an aspect of the disclosed technology.
Figure 3 illustratively depicts an example of a D2D module in accordance with an aspect of the disclosed technology.
Figure 4 illustratively depicts an example of a pair of D2D modules in accordance with an aspect of the disclosed technology.
Figure 5 shows an example width conversion from 1.15Ghz to 1Ghz in accordance with an aspect of the disclosed technology.

### DETAILED DESCRIPTION

The disclosed technology provides a link layer architecture for D2D interconnections or communications. The architecture includes a self-contained D2D module that is capable of receiving data in multiple input bus protocols and transferring that data through a physical layer connection to another chiplet. The D2D module is a self-contained base block used to transfer data across dies. It includes a transmit (Tx) section/logic and a receive (Rx) section/logic. Each section/logic forms a building block that can be used to transfer data between dies or chiplets. Each Tx section/logic may be considered a Tx building block, and each Rx section/logic may be considered a Rx building block. Each Tx building block can take in data associated with several input bus protocols, merge and transfer such data through D2D physical layers to Rx building blocks that convert such data back to the original or other input bus protocols. To better leverage the existing physical layer bandwidth, most times, multiple building blocks can share the same D2D physical layer. For example, where two chiplets are involved, each chiplet includes a D2D module with the transmit section of one chiplet interconnected or communicating with the receive section of the other chiplet and vice versa.

At a high level, a Tx section/logic takes in data formatted in one or more input protocol data buses. The input data may comprise data formatted in accordance with different protocols from different chip vendors. The input data is converted into data having a predefined data width. The data having a predefined width is processed by a data splitter, which splits the data it receives into data for one or more physical layer transmit FIFO wrappers. The output from the transmit wrappers are multiplexed and provided as input to one or more physical layer transmitters, which transmit data to another die. The Rx section/logic operates to essentially provide the opposite functionality to that provided by the Tx section/logic.

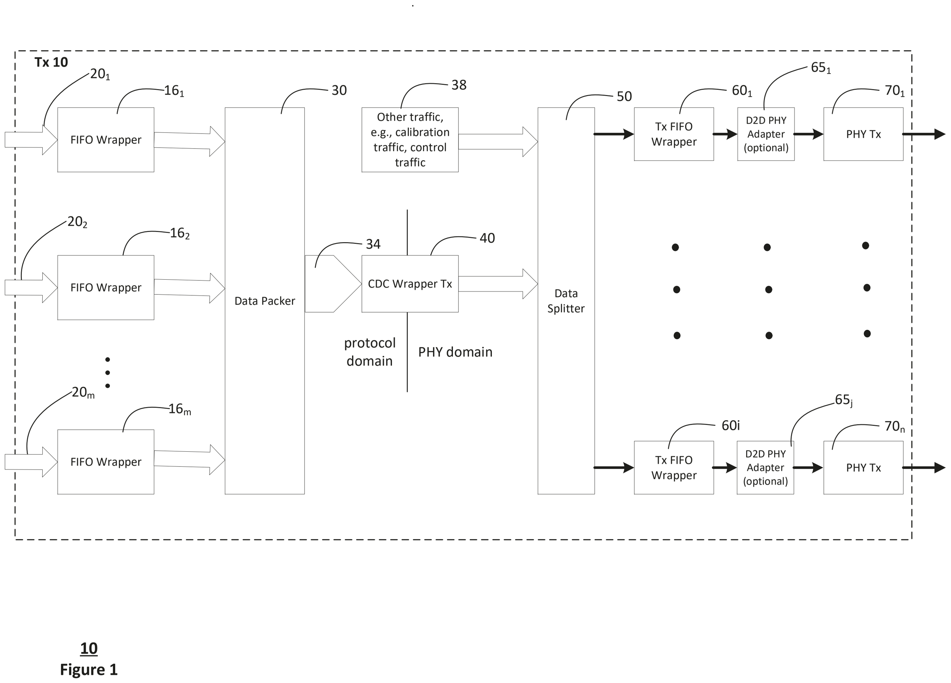

Figure 1 illustratively depicts an example transmit section/logic 10 (or Tx 10) in accordance with an aspect of the disclosed technology. Tx 10 may be considered a Tx building block. Transmit section/logic 10 receives input data at First-In-First-Out (FIFO) wrappers 16₁, 16₂ and 16ₘ via one or more data buses 20₁, 20₂ through 20ₘ. Though Figure 1 shows multiple FIFO wrappers 16, the transmit section/logic 10 may include one FIFO wrapper. The input data may comprise data formatted in accordance with one or more input protocol bus data. In addition, there need not be a one-to-one correspondence between the number of data buses and number of FIFO wrappers. For example, multiple data buses may be coupled to one FIFO wrapper, e.g., via a switching mechanism. In general, input protocol bus data refers to data transmitted on buses 20, which are normally used to transfer information between dies or chiplets. The protocols will typically be from different chip vendors and may include chips that make use of Google's own protocol. A given protocol typically defines the format and timing of the data transmitted on the bus.

Each FIFO wrapper 16 may take in one or more input protocol bus data. The FIFO wrappers 16 may operate, for example, using a credit based flow control mechanism. Each FIFO wrapper includes two logic components: (1) a FIFO and (2) credit counter. The FIFO is used as the default receive FIFO for the respective input data bus 20. The credit counter operates to control flow in the FIFO. Generally, each FIFO wrapper 16 is provided with a credit that is used to increment the credit counter. As data is sent from a FIFO wrapper 16, its credit counter gets decremented. When a credit counter reaches zero ("0"), the FIFO wrapper associated with that credit counter stops sending data. In that regard, the FIFO associated with the credit counter (in the relevant FIFO wrapper) may stop outputting data when the credit counter reaches zero.

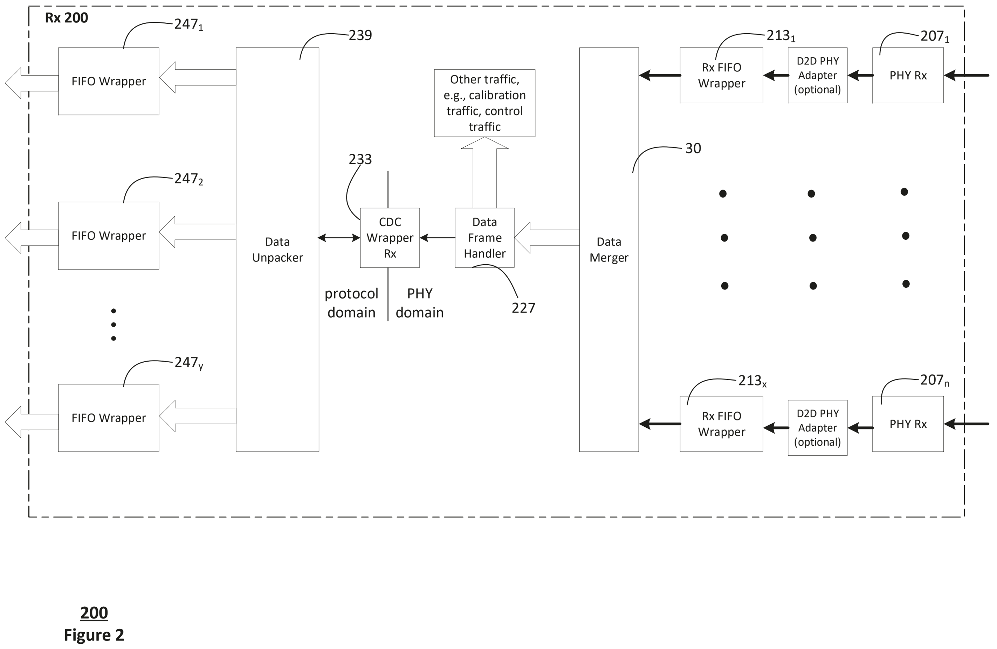

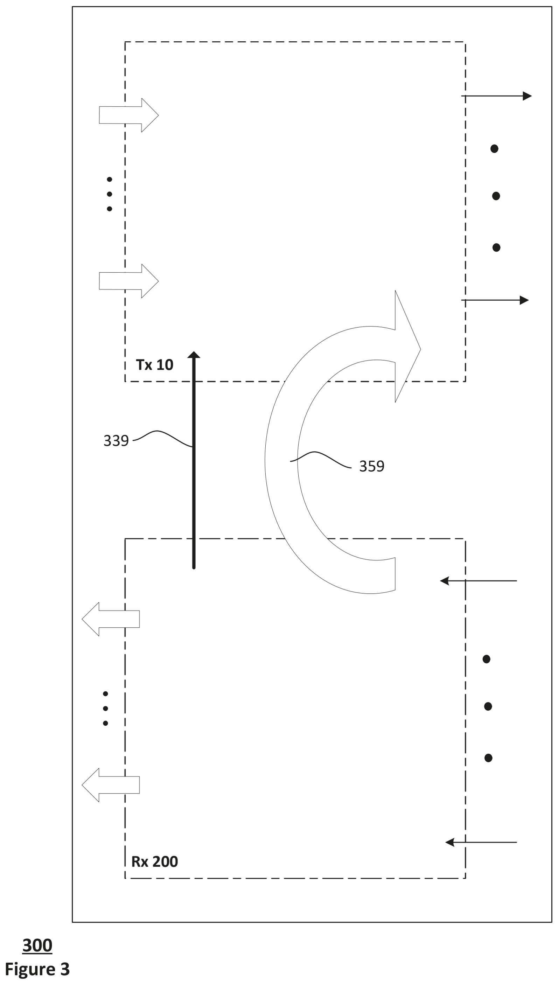

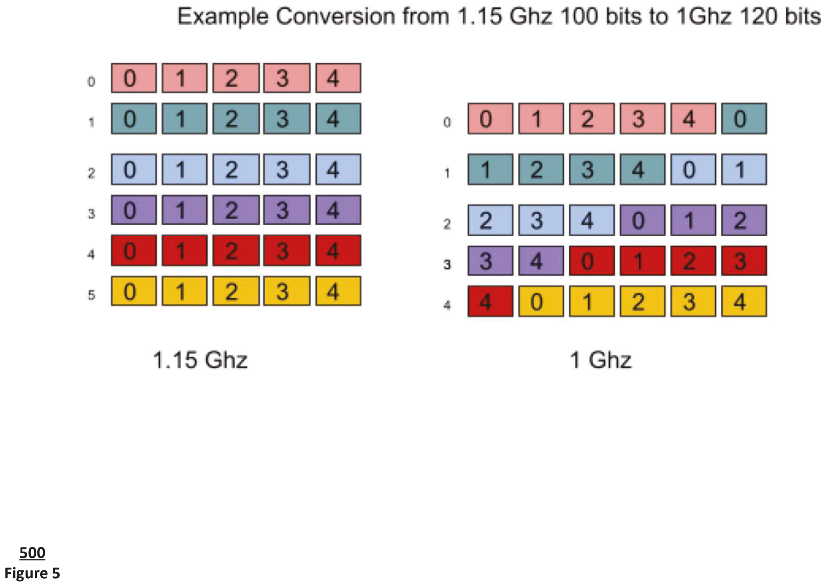

The FIFO wrapper(s) 16 output data to data packer 30. Data packer 30 converts the data it receives from the FIFO wrappers into data having a predefined data width 34. Data packer 30 is the instantiation of a data width converter on the transmit section/logic (Tx 10). Every cycle, data packer 30 scans the output of each transmitting FIFO (Tx FIFO) wrapper 60 and "credit" signal(s) from each Rx FIFO wrapper of the Rx section/logic corresponding to the Tx section/logic of a given D2D module (see Figures 2 and 3). It also converts the input signals to another data width for the target bandwidth. The data width or width of the data corresponds to size of the packets sent or received by a component of a D2D module. The conversion performed by data packer 30 is done as a function of the width of the data output by the FIFO wrappers in addition to other signals and a ratio of a protocol layer clock frequency and a physical layer clock frequency. The other signals are depicted in Figure 1 at block 38 and may include flow control signals associated with end-to-end credits and control signals associated with loop functionality associated with the data splitter 50. The output of data packer 30, for example, may include the data for each Tx FIFO wrapper 60, and validity and ready bits for the Rx FIFO wrappers 60. An example of how a data packer, as well as a data unpacker discussed in relation to Figure 2, is discussed in relation to Figure 5.

The protocol and the D2D may be running at different frequencies. To use the D2D interface bandwidth efficiently, protocol data will be packed onto the D2D interface by data packer 30. This packing may involve non-integral cycles of protocol data. D2D Frame length is the number of transfers in the D2D clock that it takes to transfer an integer number of transfers in the protocol clock. For example, if the protocol is 400 bits wide and the D2D is 500 bits wide, then 5 cycles of the protocol can be packed onto 4 cycles of the D2D interface. In this case the protocol frame length is 5 and the D2D frame length is 4. A new D2D frame starts when bit 0 of the protocol data is the earliest data that is part of the D2D data and ends the cycle before the start of the next D2D frame. The protocol frame is composed of all the protocol cycles that are part of a D2D frame.

The frame length is determined by the data width and the operating frequencies of the protocol and the D2D. Consider the following example: a PHY operating at 1 Ghz, a protocol operating at 1.15 GHz and 100 bits wide protocol data. The number of bits required in the PHY will be (1.15 Ghz * 100 bits / 1Ghz) = 115 bits. The D2D frame length in this example would be 20 since LCM (115, 100) = 2300 and 2300/115 = 20, i.e., in 20 1Ghz transfers with a data width of 115 bits, 23 1.15 Ghz transfers with a data width of 100 bits can be transmitted. Note that the data width in the PHY can be larger than the 115. This reduces the minimum frame length. In the above example, if 120 bits is used instead of 115, the frame length will drop to 5. 4% of the PHY bandwidth (5/120) will be wasted. The number of bits in a D2D frame must be equal or more than the number of bits in a protocol frame. For example, if the protocol frame is 100 bits wide with a frame length of 5 and the D2D frame is 175 bits with a frame length of 3, the last 25 bits in the third frame of the D2D frame is dropped. This can help in reducing frame lengths with a small performance loss. In the above example, the loss is 25 bits /500 = 5%. The training signal (TS) (and data frame (DF)) frame length can be larger than the minimum as long as it is a multiple of the minimum. In the above examples, the frame length could be 40 or 60 if needed.

The data packer 30 outputs the data having a predefined data width 34 to a clock domain crossing (CDC) transmit wrapper 40. CDC transmit wrapper 40 functions to address the difference in clock rates between the incoming data on buses 20 and the data outputted by the physical layer transmitters (PHY Txs) 70. Specifically, the incoming data (e.g.., the input protocol data) runs in one clock domain while the physical layer (e.g., data splitter 50, Tx FIFO wrappers 60 and PHY Txs 70) run in another clock domain. The CDC transmit wrapper 40 in effect bridges the data transfer between the two clock domains. The protocol uses two types of frames: data frames (DF = 1) and Training frames (DF = 0). The length of the data frame and training frame are the same. The CDC transmit wrapper 40 outputs the data it processes to data splitter 50. Data splitter 50 distributes the data it receives among one or more TX FIFO wrappers. It also receives one or more other traffic signals 38, which may include flow control and other control signals or traffic. For example, a control signal may cause a test signal or traffic to input to the data splitter 50 as a part of loop back functionality with a corresponding Rx logic/section.

Figure 5 shows an example width conversion from 1.15Ghz to 1Ghz. In this example, a wider than required width of 120 bits is used. This would cause some unused cycles in the 1 Ghz D2D clock. Every bit output can be from 5 different offsets and hence needs a 5:1 multiplexer. Lowering the width to 115 bits would have increased the frame width to 20 and so every output can be from 20 different offsets requiring larger multiplexer structures.

In the data width converter or data packer, number of protocol frame * N is smaller or equal to number of D2D frame * M to maintain the bandwidth and simplify design logics. For example, in the ideal case, number of protocol frame * N = number of D2D frame * M; where protocol frame = 5, input bits width N = 120, D2D frame = 6 and output bits width M = 100. But in reality, protocol frame * N can be smaller than D2D frame * M. Where protocol frame = 5, input bits width N = 115, D2D frame = 6 and output bits width M = 100. In this case, every 6 cycles, there will be 6*100 - 5 * 115 = 25 bits get wasted which is about 4% efficiency lost. But this design simplifies the MUX structure of the data width converter which may be worth it. The exact number of protocol frames and number of D2D frames is case by case and needs to be carefully traded off in the design phase.

Data splitter 50 splits the data it receives into data for one or more physical layer Tx FIFO wrappers 60. A Tx FIFO wrapper includes two logic components: (1) a FIFO, and (2) a credit counter. The FIFO is used to transfer data and act as an output register. The credit counter is for credit based flow control between Tx and Rx PHY FIFO wrappers that form a D2D module. The credit counter is used to record the number of available slots in the RX FIFO on another die with which Tx 10 communicates with (see, e.g., Tx 10A and Rx 200B or, vice versa, Tx 10B and Rx 200A). For instance, if the credit counter is 0, which means the corresponding Rx FIFO is full, the credit counter will throttle the Tx FIFO by not consuming new data from the Tx FIFO.

As shown in Figure 1, a TX FIFO wrapper 60 may output the signals or traffic it generates to a D2D PHY adapter 65. PHY adapter 65 may be needed where the format of physical layer signal may need to be adjusted to match up with the other die that TX 10 communicates with. For instance, the die that includes Tx 10 may be from a first chip vendor but is communicating with a die from a different chip vendor. The chip vendors in that instance may use different physical layer formats.

As previously discussed, credit can be understood as a control signal for the transmitting logic. For instance, only when a Tx FIFO wrapper 60 has a credit is it allowed to push data to a PHY Tx 70, otherwise it will hold the data until it has new credit. The data width of each Tx FIFO wrapper 70 may vary and be different than another transmit FIFO wrapper. The output from the Tx FIFO wrappers 70 are multiplexed and provided as input to one or more physical layer (PHY) transmitters 70, which transmit data to another die.

In accordance with an aspect of the disclosed technology, this other die is configured with a receive section/logic that is coupled to the PHY Tx 70 outputs. In this regard, Figure 2 illustratively depicts an example receive section/logic (Rx) 200 in accordance with this aspect of the disclosed technology. The Rx section/logic 200 operates to essentially provide the opposite functionality to that provided by the Tx section/logic 10. Rx section/logic 200 may be considered an Rx building block.

At a high-level Rx section/logic 200 operates as follows. A PHY receiver (PHY Rx) 207 receives the data sent by a PHY Tx 70 and puts it on an output interface. A Rx FIFO wrapper 213 scans the output of the PHY Rx 213. If the data on the output interface is valid, a Rx FIFO wrapper 213 accepts the data. In general, the Rx FIFO wrapper is the opposite of the Tx FIFO wrapper.

A data merger 221 performs the opposite function of a data splitter. Specifically, data merger 221 de-skews transferred data by only taking in data when all of its connected FIFO wrapper(s) have valid data ready. It combines a predefined number of Rx FIFO wrappers 60 outputs. Depending on a control signal, data merger 221 either sends the traffic from those outputs to a data frame handler 227 or loops back the data to the data merger 221 for a loop-back test. The data frame handler 227 decides which way to send the traffic. For instance, it may send the data to a test generator module (not shown) and an output protocol FIFO (not shown) by frame type. The frame type is a signal used to indicate which type of data packet is being transferred, e.g., normal data or test data (as part of a loopback test).

When the data is normal data, data frame handler 227 outputs the data to a CDC receive (Rx) wrapper 233. CDC Rx wrapper 233 provides similar function to CDC Tx wrapper 40. Specifically, CDC Rx wrapper 233 bridges the different clock domains between the protocol data (i.e., data unpacker 239 and output protocol bus FIFO wrappers 247) and physical layer components or modules (e.g., Rx FIFO wrapper 213 and PHY Rx 207). Data unpacker 239 converts the output of the data frame handler 247 and distributes the data to each output protocol bus FIFO wrappers 247.

As discussed above, the disclosed D2D module does not run at a single clock frequency. Instead, it runs using primarily two clocks - a protocol clock and a paired physical layer clock. The clock domains are shown in Figures 1 and 2 by lines 70 and 270 with the protocol clock domain shown to the left of each line and the physical layer clock domain shown to the right of each line. Ideally, most of the core logic runs at the protocol bus clock the core logic connects to, so as to minimize the latency by adding extra CDC logic. The other clock is the PHY clock the CDC logic interfaces with.

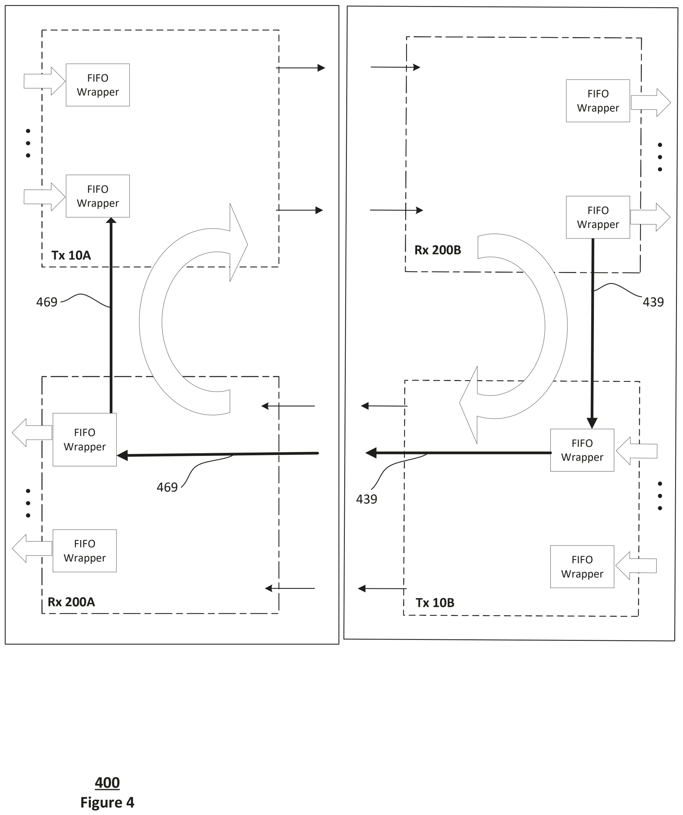

As shown in Figure 3 a D2D module is formed on a die 300 by interconnecting a transmit section/logic 10 and receiving section/logic 200. Credit control flow 339 occurs from Rx 200 to Tx 10. In addition, loop back functionality359 occurs between a data merger and a data splitter (neither shown in Figure 3, but see Figure 2). As shown in Figure 4, two dies 410, 420 may communicate using respective D2D modules. Specifically, a first D2D module is formed on or within die 410 using Tx section/logic 10₁ and Rx section/logic 200₁. Similarly, a first D2D module is formed on or within die 410 using Tx section/logic 10₂ and Rx section/logic 200₂.

A D2D module may be formed as a combination of instructions and/or circuitry. For instance, the PHY Txs and Rxs may comprise circuitry configured to transmit and receive the data prepared as discussed above across dies or chiplets. On the other hand, other elements such as the FIFO wrappers, data packer and unpacker, CDC wrapper and data splitter may be formed as modules that comprise instructions that process the data using processing elements and returns output to the next component. In this regard, the D2D module, Tx logic/section, Rx logic/section and/or any of the processing elements or modules discussed previously and shown in the drawings can be implemented in one or more application specific integrated circuits (ASICs). Further, logic may comprise components, e.g., digital circuits such as logic gates, flip-flops, registers, etc., that perform logical operations, e.g., AND, OR, etc.

The D2D building block, i.e., corresponding Tx and Rx building blocks across two dies that are communicating, adopts an end-to-end credit flow control scheme between one or more Rx side FIFO buffers 247 and one or more Tx side FIFO buffers 16 to decouple different protocol buses. The end-to-end credit scheme is depicted via released credit 439 and transferred credit 469. In general, all protocol buses into the same building block will be combined and sent over the PHY. Typically, this bus data will share the same logic and may lock out each other if one of the output buses gets stuck. To mitigate against this happening, the D2D module takes end-to-end credit flow control. Either output FIFO (RX side) and input FIFO (TX side) share the same credit control loop. This way, even when one protocol bus downstream is stuck (all credits are used), the other protocol bus transfer can still flow. Protocol buses into the same building block are combined and sent over the PHY Tx 70. Such bus data typically share the same logic which causes locking between the logic if one of the output buses gets stuck. To mitigate against this potential issue, the disclosed D2D technology uses end-to-end credit flow control. Corresponding output Rx FIFO buffers 247 and input Tx FIFO buffers 16 share the same credit control loop. This way, even when one protocol bus downstream is stuck (all credits are used), other protocol bus transfers can still flow.

The disclosed technology provides various advantages. For example, it is protocol agnostic, i.e., dies or chiplets are free to use different protocols as the D2D module supports any protocol across dies over the link layer. It also accommodates any frequency ratio. More specifically, the data packer / unpacker can be configured based on a ratio between protocol clock frequency and a physical layer clock frequency to meet system bandwidth requirements. It also enables coupling of multiple D2D PHYs for wide buses or utilization of one D2D PHY layer coupling for multiple narrow buses. Further, it can handle traffic widths that differ between dies (dieA to dieB traffic width is 200b while dieB to dieA traffic width is 100b).

The disclosed technology may take the form of apparatuses and/or systems that include the following combination of features:
**F1**. An apparatus for die-to-die interconnections, comprising:
   one or more input first-in-first-out (FIFO) wrappers configured to receive input data formatted according to a given protocol;
   a data packer configured to convert the input data to converted data having a predefined data width;
   one or more transmit FIFO wrappers; and
   a data splitter coupled to the data packer and the one or more transmit FIFO wrappers, the data splitter being configured to split the converted data for receipt at the one or more transmit FIFO wrappers.
**F2.** The apparatus for die-to-die interconnections of **F1**, wherein at least two of the one or more transmit FIFO wrappers are configured to have an adjustable storage capacity to receive different amounts of the converted data.
**F3.** The apparatus for die-to-die interconnections of any one of **F1** and **F2,** comprising a CDC logic coupled between the data packer and the data splitter.
**F4.** The apparatus for die-to-die interconnections of any one **of F1** to **F3,** wherein the data packer operates in a first time domain using a first clock running at a first clock frequency and the plurality of transmit FIFO wrappers operate in a second time domain using a second clock running at a second clock frequency.
**F5.** The apparatus for die-to-die interconnections of any one of **F1** to **F4,** wherein the CDC logic operates to bridge the first time domain and the second time domain.
**F6.** The apparatus for die-to-die interconnections of any one of **F1** to **F5,** wherein the plurality of input FIFO wrappers operate in the first time domain.
**F7.** The apparatus for die-to-die interconnections of any one of **F1** to **F6,** comprising a plurality of transmit modules coupled to the plurality of transmit FIFO wrappers.
**F8.** The apparatus for die-to-die interconnections of any one of **F1** to **F7,** wherein each transmit module of the plurality of transmit modules is coupled to a respective one of the plurality of transmit FIFO wrappers.
**F9.** The apparatus for die-to-die interconnections of any one of **F1** to **F8,** wherein the apparatus is formed on a chiplet of a system on a chip (SoC).
**F10.** An apparatus for die-to-die interconnections, comprising:
   one or more input first-in-first-out (FIFO) wrappers configured to receive input data formatted according to a given protocol;
   a data packer configured to operate in a first time domain and to convert the input data to converted data having a predefined data width;
   a data splitter coupled to the data packer, the data splitter being configured to operate in a second time domain and to split the converted data for receipt at the one or more input FIFO wrappers; and
   a CDC logic coupled between the data packer and the data splitter, wherein the CDC logic operates to bridge the first time domain and the second time domain.
**F11.** The apparatus for die-to-die interconnections of **F10,** comprising a plurality of transmit FIFO wrappers coupled to the data splitter.
**F12.** The apparatus for die-to-die interconnections of any one of **F10** and **F11,** wherein at least two of the plurality of transmit FIFO wrappers are configured to have an adjustable storage capacity to receive different amounts of the converted data.
**F13.** The apparatus for die-to-die interconnections of any one of **F10** to **F12,** wherein the apparatus is formed on a chiplet of a system on a chip (SoC).
**F14.** An apparatus for die-to-die interconnections, comprising:
   one or more receive FIFO wrappers that output received data;
   a data expander coupled to the plurality of receive FIFO wrappers, the data expander being configured to process the received data to converted data having a predefined data width;
   a protocol unpacker configured to convert the converted data to data formatted according to a given protocol; and
   one or more output first-in-first-out (FIFO) wrappers configured to output the data formatted according to a given chiplet protocol.
**F15.** The apparatus for die-to-die interconnections **of F14,** wherein the protocol unpacker is configured to operate in a first time domain.
**F16.** The apparatus for die-to-die interconnections of any one of **F14** and **F15,** wherein the data expander is configured to operate in a second time domain.
**F17.** The apparatus for die-to-die interconnections of any one of **F14 to F16,** comprising a CDC logic coupled between the protocol unpacker and the data expander, wherein the CDC logic operates to bridge the first time domain and the second time domain.
**F18.** A system for die-to-die interconnections, comprising:
   one or more input first-in-first-out (FIFO) wrappers configured to receive input data formatted according to a first one of a plurality of given protocols;
   a data packer configured to operate in a first time domain and to convert the input data to transmit converted data having a predefined data width;
   a data splitter coupled to the data packer, the data splitter being configured to operate in a second time domain and to split the transmit converted data for receipt at the plurality of input FIFO wrapper;
   a CDC transmit logic coupled between the data packer and the data splitter, wherein the transmit CDC logic operates to bridge the first time domain and the second time domain;
   a plurality of receive FIFO wrappers that output received data;
   a data expander coupled to the plurality of receive FIFO wrappers, the data expander being configured to operate in the second time domain and to process the received data to received converted data having the predefined data width;
   a protocol unpacker configured to operate in the first time domain and to convert the received converted data to output data formatted according to a second one of the plurality of given protocols; and
   one or more output first-in-first-out (FIFO) wrappers configured to output the data formatted according to a second one of the plurality of given protocols.
**F19.** The system for die-to-die interconnections **of F18,** wherein the system is formed on a chiplet of a system on a chip (SoC).
**F20.** The system for die-to-die interconnections of any one of **F18** and **F19,** wherein the first one of the plurality of given protocols is different than the second one of the plurality of given protocols.
**F21.** The system for die-to-die interconnections of any one of **F18 to F20,** wherein the first one of the plurality of given protocols is a same protocol as the second one of the plurality of given protocols.
**F22.** The system for die-to-die interconnections of any one of **F18 to F21,** comprising a loop back path between the data expander and the data splitter.
**F23.** A system comprising any one of **F1** to **F17.**

Although the technology herein has been described with reference to particular examples, it is to be understood that these examples are merely illustrative of the principles and applications of the disclosed technology. It is, therefore, to be understood that numerous modifications may be made to the illustrative examples and that other arrangements may be devised without departing from the spirit and scope of the present technology as defined by the appended claims.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only some but not all possible variations of the disclosed technology. Further, the same reference numbers in different drawings can identify the same or similar elements.

## Claims

1. An apparatus for die-to-die interconnections, comprising:
one or more input first-in-first-out, FIFO, wrappers configured to receive input data formatted according to a given protocol;
a data packer configured to convert the input data to converted data having a predefined data width;
one or more transmit FIFO wrappers; and
a data splitter coupled to the data packer and the one or more transmit FIFO wrappers, the data splitter being configured to split the converted data for receipt at the one or more transmit FIFO wrappers.

2. The apparatus for die-to-die interconnections of claim 1, wherein at least two of the one or more transmit FIFO wrappers are configured to have an adjustable storage capacity to receive different amounts of the converted data.

3. The apparatus for die-to-die interconnections of claim 1 or claim 2, comprising a CDC logic coupled between the data packer and the data splitter.

4. The apparatus for die-to-die interconnections of claim 3, wherein the data packer operates in a first time domain using a first clock running at a first clock frequency and the one or more transmit FIFO wrappers operate in a second time domain using a second clock running at a second clock frequency;
wherein the CDC logic optionally operates to bridge the first time domain and the second time domain; and
wherein the one or more input FIFO wrappers optionally operate in the first time domain.

5. The apparatus for die-to-die interconnections of any one of claims 1 to 4, comprising one or more transmit modules coupled to the one or more transmit FIFO wrappers.

6. The apparatus for die-to-die interconnections of claim 5, wherein each transmit module of the one or more transmit modules is coupled to a respective one of the one or more transmit FIFO wrappers.

7. The apparatus for die-to-die interconnections of any one of claims 1 to 6, wherein the apparatus is formed on a chiplet of a system on a chip (SoC).

8. An apparatus for die-to-die interconnections, comprising:
one or more input first-in-first-out, FIFO, wrappers configured to receive input data formatted according to a given protocol;
a data packer configured to operate in a first time domain and to convert the input data to converted data having a predefined data width;
a data splitter coupled to the data packer, the data splitter being configured to operate in a second time domain and to split the converted data for receipt at the one or more input FIFO wrappers; and
a CDC logic coupled between the data packer and the data splitter, wherein the CDC logic operates to bridge the first time domain and the second time domain.

9. The apparatus for die-to-die interconnections of claim 8, comprising a plurality of transmit FIFO wrappers coupled to the data splitter.

10. The apparatus for die-to-die interconnections of claim 9, wherein at least two of the plurality of transmit FIFO wrappers are configured to have an adjustable storage capacity to receive different amounts of the converted data.

11. The apparatus for die-to-die interconnections of any one of claims 8 to 10, wherein the apparatus is formed on a chiplet of a system on a chip, SoC.

12. An apparatus for die-to-die interconnections, comprising:
one or more receive first-in-first-out, FIFO, wrappers that output received data;
a data expander coupled to the plurality of receive FIFO wrappers, the data expander being configured to process the received data to converted data having a predefined data width;
a protocol unpacker configured to convert the converted data to data formatted according to a given protocol; and
one or more output first-in-first-out, FIFO, wrappers configured to output the data formatted according to a given chiplet protocol.

13. The apparatus for die-to-die interconnections of claim 12, wherein the protocol unpacker is configured to operate in a first time domain;
wherein the data expander is optionally configured to operate in a second time domain; and
further optionally comprising a CDC logic coupled between the protocol unpacker and the data expander, wherein the CDC logic operates to bridge the first time domain and the second time domain.

14. A system for die-to-die interconnections, comprising:
one or more input first-in-first-out, FIFO, wrappers configured to receive input data formatted according to a first one of a plurality of given protocols;
a data packer configured to operate in a first time domain and to convert the input data to transmit converted data having a predefined data width;
a data splitter coupled to the data packer, the data splitter being configured to operate in a second time domain and to split the transmit converted data for receipt at the one or more input FIFO wrappers;
a CDC transmit logic coupled between the data packer and the data splitter, wherein the transmit CDC logic operates to bridge the first time domain and the second time domain;
a plurality of receive FIFO wrappers that output received data;
a data expander coupled to the plurality of receive FIFO wrappers, the data expander being configured to operate in the second time domain and to process the received data to received converted data having the predefined data width;
a protocol unpacker configured to operate in the first time domain and to convert the received converted data to output data formatted according to a second one of the plurality of given protocols; and
one or more output first-in-first-out, FIFO, wrappers configured to output the data formatted according to a second one of the plurality of given protocols.

15. The system for die-to-die interconnections of claim 14, wherein the system is formed on a chiplet of a system on a chip, SoC; and/or
wherein the first one of the plurality of given protocols is different than the second one of the plurality of given protocols; and/or
wherein the first one of the plurality of given protocols is a same protocol as the second one of the plurality of given protocols; and/or
comprising a loop back path between the data expander and the data splitter.
